# EUROPÄISCHE PATENTSCHRIFT

(11) **EP 1 528 282 B1**
(45) Veröffentlichungstag und Bekanntmachung des Hinweises auf die Patenterteilung: **19.09.2007**
(21) Anmeldenummer: 04024226.5
(22) Anmeldetag: 19.10.2004
(51) Int. Cl.: F16F 9/46

(54) **Ventilgehäuse mit einer integrierten Schaltungsanordnung**
Valve housing with integrated electronic circuit
Corps de soupape avec un circuit electronique integre

(30) Priorität: 28.10.2003 DE 10350400; 17.07.2004 DE 102004034726
(43) Veröffentlichungstag der Anmeldung: 04.05.2005
(73) Patentinhaber: ZF FRIEDRICHSHAFEN AG, 88046 Friedrichshafen (DE)
(72) Erfinder: Albert, Bernd, 97478 Knetzgau (DE); Lindenthal, Jürgen, 36124 Eichenzell (DE); Rappelt, Stefan, 97447 Gochsheim (DE); Wittwer, Christina, 97469 Gochsheim (DE)

(56) Entgegenhaltungen:
- EP-A- 0 559 197
- EP-A- 0 883 142
- DE-A1- 10 204 913
- DE-A1- 19 718 835
- DE-A1- 19 722 216
- DE-A1- 19 841 857
- FR-A- 2 805 492
- US-A- 5 006 901

## Beschreibung

Die Erfindung betrifft ein Ventil, insbesondere für einen Schwingungsdämpfer, entsprechend dem Oberbegriff von Patentanspruch 1.

Aus der DE 199 50 177 A1 ist es bekannt, einen Schwingungsdämpfer als Fahrwerksbauteil mit elektronischen Komponenten auszurüsten, wobei die Systemkonfiguration den Aufwand für die Schaltungsanordnung bestimmt. Eine detaillierte konstruktive Umsetzung ist der Beschreibung nicht entnehmbar.

Die DE 44 27 559 A1 bezieht sich auf einen Schwingungsdämpfer mit veränderbarer Dämpfkraft, an dessen Ventilbaugruppe ein Beschleunigungssensor befestigt wurde. Der Beschleunigungssensor ist in einem scheibenartigen separaten Gehäuse angeordnet, das die Rückseite eines verstellbaren Ventils abdeckt.

Für eine optimale Einstellung der Ventilbaugruppe eines verstellbaren Ventil ist es beispielsweise aus der DE 197 22 216 A1 bekannt, eine Gehäusekappe zu verwenden, die einen Zugriff auf das verstellbare Ventil, z. B. einer Stellschraube zur Einstellung einer Feder, die auf einen Anker wirkt, oder einen Leitkörper zur Einstellung des magnetischen Flusses innerhalb eines Magnetkreises ermöglicht.

Eine Übertragung eines scheibenartigen Gehäuses auf eine Ventilbaugruppe nach der DE 197 22 216 A1 ist nicht möglich, da ansonsten eine wesentliche Einstellmöglichkeit der Ventilbaugruppe nicht mehr zur Verfügung steht.

Eine Alternative könnte darin bestehen, dass die Schaltungsanordnung in einem separaten Gehäuse an dem Schwingungsdämpfer befestigt wird. Damit ist aber das Problem der Kabelführung zur Ventilbaugruppe verbunden.

Die US 5 006 901 beschreibt ein Ventil mit einem Spulenkörper, der ein axial bewegliches Ventilelement ansteuert. Der Spulenkörper ist in einem Ventilgehäuse in Reihe zu einer Schaltungsanordnung platziert, die eine Kunststoffummantelung aufweist. Zwischen der Schaltungsanordnung und dem Spulenkörper liegt eine Kabelverbindung vor. Eine weitere Verbindung ist nicht offenbart, so dass die genannten Bauteile zwar separat montierbar aber insbesondere im Bereich der Kabelverbindungen sehr empfindlich sind.

Als nächstliegender Stand der Technik wird Dokument EP-A-0883142 angesehen, welches den Oberbegriff von Anspruch 1 offenbart.

Aufgabe der vorliegenden Erfindung ist es, eine möglichst einfache und belastbare Anbindung der Schaltungsanordnung am Schwingungsdämpfer zu realisieren.

Erfindungsgemäß wird die Aufgabe die Merkmale des kennzeichnenden Teils gelöst, insbesondere dadurch, daß die den Spulenkörper einhüllende äußere Kunststoffummantelung zusätzlich auch die Beschichtung der Leiterplatte umschließt.

Der große Vorteil besteht darin, dass einerseits ein besonders wirksamer Schutz gegen Schmutz und andererseits eine sehr gut handhabbare Baueinheit vorliegt.

In weiterer Ausgestaltung weist die Leiterplatte einen kreisringförmigen und einen sich daran radial anschließenden Bestückungsbereich für elektronische Bauteile auf. Der sich radial anschließende Bestückungsbereich dient vornehmlich für größere elektronische Bauelemente.

Gemäß einem vorteilhaften Unteranspruch ist vorgesehen, dass der kreisringförmige Bestückungsbereich in seiner radialen Ausdehnung einer Spule des Aktuators angepasst ist. Damit benötigt die Leiterplatte keinen größeren Bauraum als die Spule. Andererseits kann die Spule auf einem sehr kurzen Weg an die Leiterplatte angeschlossen werden, auf der wiederum die elektrische Verbindung zu einem Anschlusskabel ausgeführt ist.

In weiterer konstruktiver Ausgestaltung geht die Beschichtung der Schaltungsanordnung zur Positionierung eine Formschlussverbindung mit dem Aktuator ein. Das Risiko einer fehlerhaften Montage wird damit minimiert.

Anhand der folgenden Figurenbeschreibung soll die Erfindung näher erläutert werden
- Fig. 1: Beschreibung der technischen Anwendung an einem Schwingungsdämpfer
- Fig. 2: Ausschnitt aus einer Absperrventilbaugruppe mit der Schaltungsanordnung
- Fig. 3: Leiterplatte als Einzelteil
- Fig. 4 - 5: Beschichtete Leiterplatte
- Fig. 6: Alternative Schaltungsanordnung zur Fig. 2

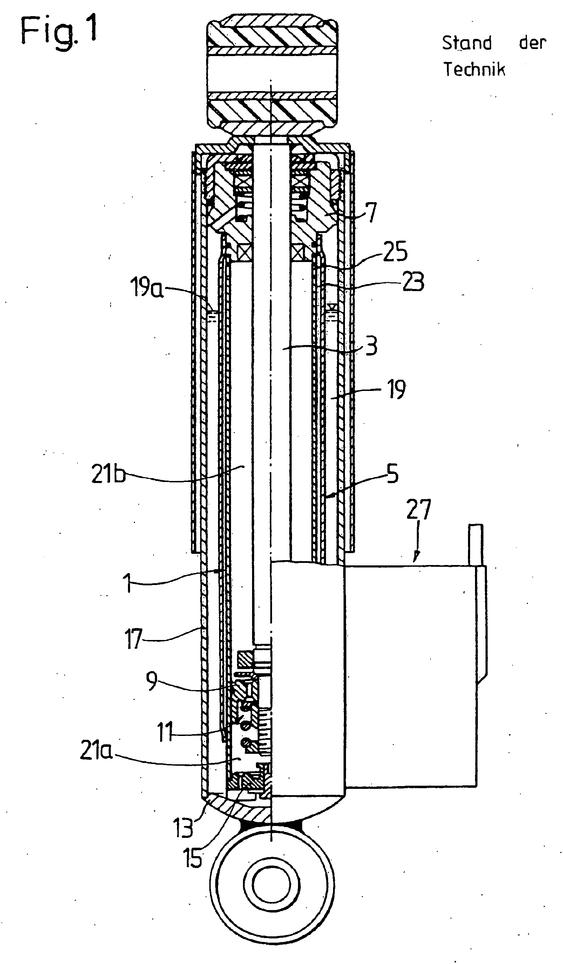

In Fig. 1 weist ein Schwingungsdämpfer einen Zylinder 1 auf, in dem eine Kolbenstange 3 axial beweglich angeordnet ist. Eine Führungs- und Dichtungseinheit 7 führt die Kolbenstange 3 aus dem oberen Ende des Zylinders heraus. Innerhalb des Zylinders 1 ist an der Kolbenstange 3 eine Kolbeneinheit 9 mit einer Kolbenventilanordnung 11 befestigt. Das untere Ende des Zylinders 1 ist durch eine Bodenplatte 13 mit einer Bodenventilanordnung 15 abgeschlossen. Der Zylinder 1 wird von einem Behälterrohr 17 umhüllt. Das Behälterrohr 17 und ein Zwischenrohr 5 bilden einen Ringraum 19, der eine Ausgleichskammer darstellt. Der Raum innerhalb des Zylinders 1 ist durch die Kolbeneinheit 9 in eine erste Arbeitskammer 21a und eine zweite Arbeitskammer 21b unterteilt. Die Arbeitskammern 21a und 21b sind mit Druckflüssigkeit gefüllt. Die Ausgleichskammer 19 ist bis zu dem Niveau 19a mit Flüssigkeit und darüber mit Gas gefüllt. Innerhalb der Ausgleichskammer 19 ist eine erste Leitungsstrecke, nämlich eine Hochdruckteilstrecke 23, gebildet, welche über eine Bohrung 25 des Zylinders 1 mit der zweiten Arbeitskammer 21b in Verbindung steht. An diese Hochdruckteilstrecke schließt sich eine seitlich an dem Behälterrohr 17 angebaute Absperrventileinrichtung 27 an. Von dieser führt, nicht dargestellt, eine zweite Leitungsstrecke, nämlich eine Niederdruckteilstrecke, in die Ausgleichskammer 19.

Fährt die Kolbenstange 3 aus dem Zylinder 1 nach oben aus, verkleinert sich die obere Arbeitskammer 21b. Es baut sich in der oberen Arbeitskammer 21b ein Überdruck auf, der sich nur durch die Kolbenventilanordnung 11 in die untere Arbeitskammer 21a abbauen kann, solange die Absperrventileinrichtung 27 geschlossen ist. Wenn die Absperrventileinrichtung 27 geöffnet ist, so fließt gleichzeitig Flüssigkeit von der oberen Arbeitskammer 21b durch die Hochdruckteilstrecke 23 und die Absperrventileinrichtung 27 in die Ausgleichskammer 19. Die Dämpfcharakteristik des Schwingungsdämpfers beim Ausfahren der Kolbenstange 3 ist also davon abhängig, ob die Absperrventileinrichtung 27 mehr oder weniger offen oder geschlossen ist. Dabei kann die Einstellbarkeit der Absperrventileinrichtung gestuft oder stufenlos erfolgen.

Wenn die Kolbenstange 3 in den Zylinder 1 einfährt, so bildet sich in der unteren Arbeitskammer 21a ein Überdruck. Flüssigkeit kann von der unteren Arbeitskammer 21a durch die Kolbenventilanordnung 11 nach oben in die obere Arbeitskammer 21b übergehen. Die durch das zunehmende Kolbenstangenvolumen innerhalb des Zylinders 1 verdrängte Flüssigkeit wird durch die Bodenventilanordnung 15 in die Ausgleichskammer 19 ausgetrieben. In der oberen Arbeitskammer 21b tritt, da der Durchflusswiderstand der Kolbenventilanordnung 11 geringer ist als der Durchflusswiderstand der Bodenventilanordnung 15, ebenfalls ein steigender Druck auf. Dieser steigende Druck kann bei geöffneter Absperrventileinrichtung 27 durch die Hochdruckteilstrecke 23 wiederum in den Ausgleichsraum 19 überfließen. Dies bedeutet, dass bei geöffneter Absperrventileinrichtung 27 der Stoßdämpfer auch beim Einfahren dann eine weichere Charakteristik hat, wenn die Absperrventileinrichtung 27 geöffnet ist und eine härtere Charakteristik, wenn die Absperrventileinrichtung geschlossen ist, genauso wie beim Ausfahren der Kolbenstange. Festzuhalten ist, dass die Strömungsrichtung durch die Hochdruckteilstrecke 23 des Bypasses immer die gleiche ist, unabhängig davon, ob die Kolbenstange ein- oder ausfährt.

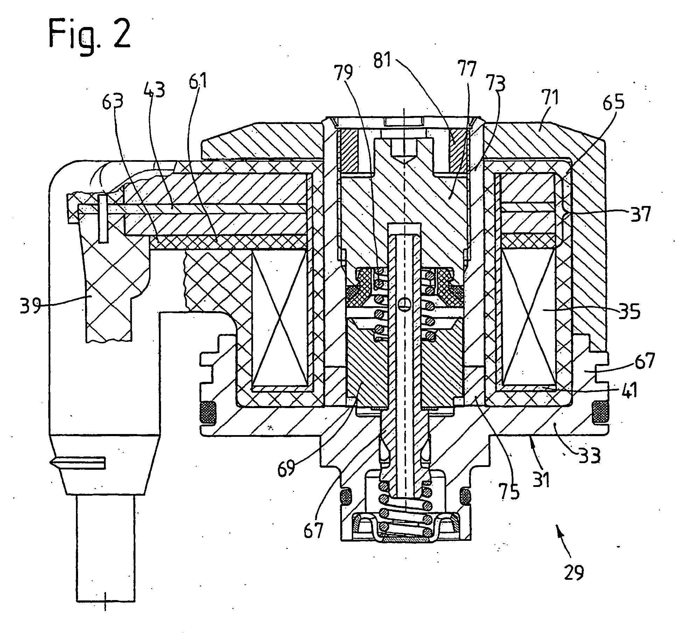

Die Fig. 2 zeigt aus der Absperrventilbaugruppe 27 einen Ausschnitt, der sich auf ein Vorsteuerventil 29 beschränkt. Auf die Beschreibung des mit dem Vorstufenventil in Wirkverbindung stehenden Hauptstufenventils wird verzichtet. In diesem Zusammenhang wird auf die DE 197 22 216 A1 verwiesen, in der detailliert auf den Aufbau und die Funktionsweise der gesamten Absperrventilbaugruppe eingegangen wird.

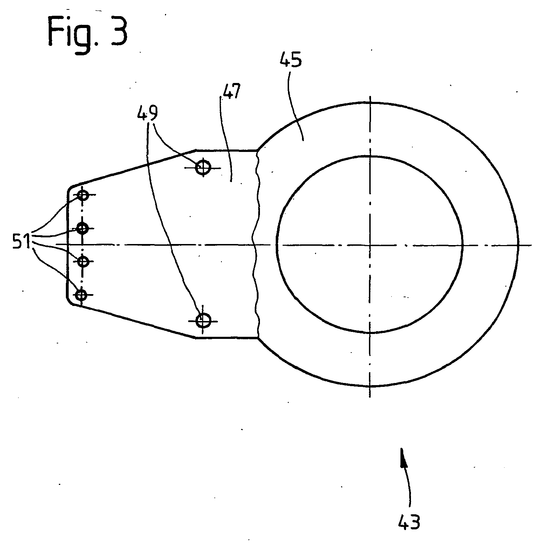

Das Vorsteuerventil 29 wird von einem topfförmigen Gehäuseunterteil 31 gehalten. Auf einem Boden 33 des Gehäuseunterteils ist eine Baueinheit, umfassend einen Spulenkörper 35 mit einer Schaltungsanordnung 37 und einem Kabelanschluss 39 geführt. Der Spulenkörper ist auf einem Träger 41 gewickelt, der bevorzugt aus einem Kunststoff besteht. Auf dem Spulenkörper ist die Schaltungsanordnung positioniert. Die Schaltungsanordnung umfasst eine Leiterplatte 43 gemäß der Fig. 3, die einen kreisringförmigen und einen sich daran radial anschließenden trapezförmigen Bestückungsbereich 45, 47 aufweist. Der kreisringförmige Bestückungsbereich ist in seiner radialen Ausdehnung der Spule angepasst. Für die Ansteuerung der Spule dienen zwei Anschlussöffnungen 49. Zusätzlich enthält die Leiterplatte einige Anschlussöffnungen 51 für die nicht dargestellten elektronischen Bauelemente auf der Leiterplatte. Der trapezförmige Bestückungsbereich 49 nimmt die größeren Bauelemente auf. Die geometrische Form der Leiterplatte wurde aus Bauraumerfordernissen im Hinblick auf eine möglichst günstige Ummantelung der Baueinheit gewählt.

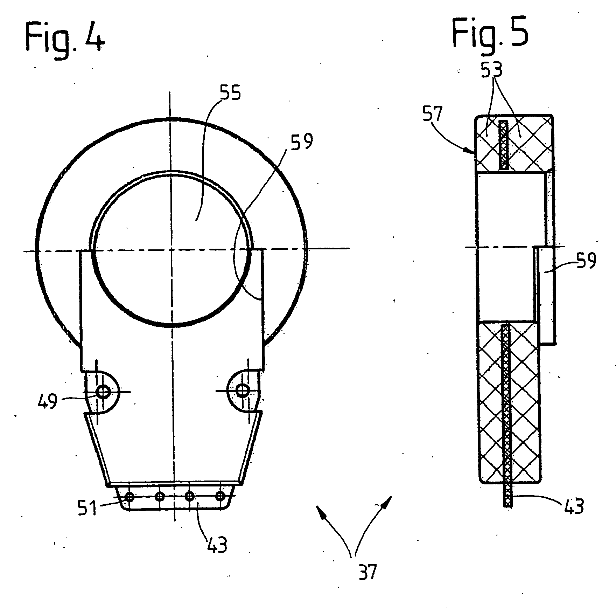

Die Figuren 4 und 5 zeigen eine Unterbaueinheit der Fig. 2, nämlich die Schaltungsanordnung 37. Auf der Leiterplatte sind die zumindest mechanisch empfindlichen elektronischen Bauteile angeordnet, die insbesondere gegen Schmutz und Nässe geschützt werden müssen. Dazu wird auf die Leiterplatte eine Beschichtung 53 aufgebracht, z. B. durch eine Tauch-Beschichtung oder einem aushärtbaren Schaum, z. B. PU-Schaum, der auch in einer Fertigungskette sehr schnell aushärtet. Bevorzugt kommt ein thermoplastischer Kleber zur Anwendung, der in einem Niederdruckverfahren aufgetragen wird. Der Druck beträgt weniger als 50 bar und die Temperatur liegt mit ca. 150°C bis 170°C ebenfalls in einem Bereich, der von den elektronischen Bauteilen ertragen werden kann. Die Beschichtung wirkt mechanisch schützend für die elektronischen Bauteile.

Die Beschichtung ist zwar im Bereich der Anschlüsse 49; 51 für die Leiterplatte ausgespart, ansonsten jedoch, auch im Bereich einer Durchgangsöffnung 55 des kreisringförmigen Leiterplattenbereichs, mit einer Schichtdicke versehen, die unterschiedliche Bauhöhen der Schaltungsanordnung ausgleicht, so dass die Oberseite eine Planfläche 57 darstellt. Trotz der einige Millimeter starken Schichtdicke härtet die Beschichtung 53 sehr schnell aus. Eine Zwischenlagerung der Schaltungsanordnung innerhalb des Fertigungsablaufs ist nicht notwendig.

An der Unterseite der Schaltungsanordnung ist eine radial verlaufende Nut 59 vorgesehen, die zu einer Anschlussscheibe 61 des Trägers 41 der Spule 35 ausgerichtet ist, so dass eine Zwangsorientierung zwischen der Spule 35 und der Schaltungsanordnung 37 vorliegt. Die Anschlussscheibe 61 trägt auch einen Kunststoffkern 63 des Anschlusskabels 39, so dass alle Komponenten zueinander ausgerichtet sind. Diese Baueinheit aus Schaltungsanordnung, Träger mit Spule und Anschlusskabel werden mit einer äußeren Kunststoffummantelung 65 versehen, die in einem Hochdruckspritzverfahren vorgenommen wird. Die dabei auftretenden Drücke von mehr als 300 bar und Temperaturen oberhalb von 300° C kann die Beschichtung 53 zuverlässig überstehen, so dass die empfindlichen elektronischen Bauteile geschützt bleiben.

Im weiteren Montageablauf wird die besagte Baueinheit auf das topfförmige Gehäuseunterteil 31 geführt. Ein Rand 67 des Gehäuseunterteils 31 zentriert die Baueinheit, wobei durch die Beschichtung 53 und die äußere Kunststoffummantelung 65 auch größere Schwingungen auf die Baueinheit einwirken können, ohne dass eine mechanische Beschädigung auftritt. Danach erfolgt die Montage eines Achskörpers 67 und eines Ringkörpers 69, die den Anker des Vorstufenventils 29 bilden. Ein kreisringförmiges Ventilgehäuse in der Bauform einer Gehäusekappe 71 in Verbindung mit einem Rückschlusskörper 73 durchgreift die Baueinheit der Spule-Schaltungsanordnung im Bereich der Durchgangsöffnung 55 bis zu einem Isolator 75 am Boden 33 des Gehäuseunterteils 31, so dass die Schaltungsanordnung innerhalb des Ventilgehäuses angeordnet ist. Die Gehäusekappe ist endseitig offen, so dass über die Aussparung in form der Durchgangsöffnung innerhalb der Schaltungsanordnung der Zugang zu einer Stellschraube 77 zur Einstellung der Federkraft einer auf den Anker wirksamen Feder 79 besteht. Des weiteren kann ein axial verschiebbarer Leitkörper 81 zur Einstellung des magnetischen Flusses, der axial in Reihe zu der Stellschraube innerhalb des Rückschlusskörpers angeordnet ist, zur Anwendung kommen. Für die Verbindung der Gehäusekappe 71 mit dem Gehäuseunterteil 31 bestehen einige Möglichkeiten, wie z. B. ein formschlüssiges Verstemmen oder ein Sicherungsring.

Die Schaltungsanordnung 37 ist durch die Platzierung innerhalb der Absperrventilbaugruppe 27 sehr gut gegen mechanische Einflüsse, die sich aus der Anwendung bei einem Schwingungsdämpfer ergeben, gut geschützt.

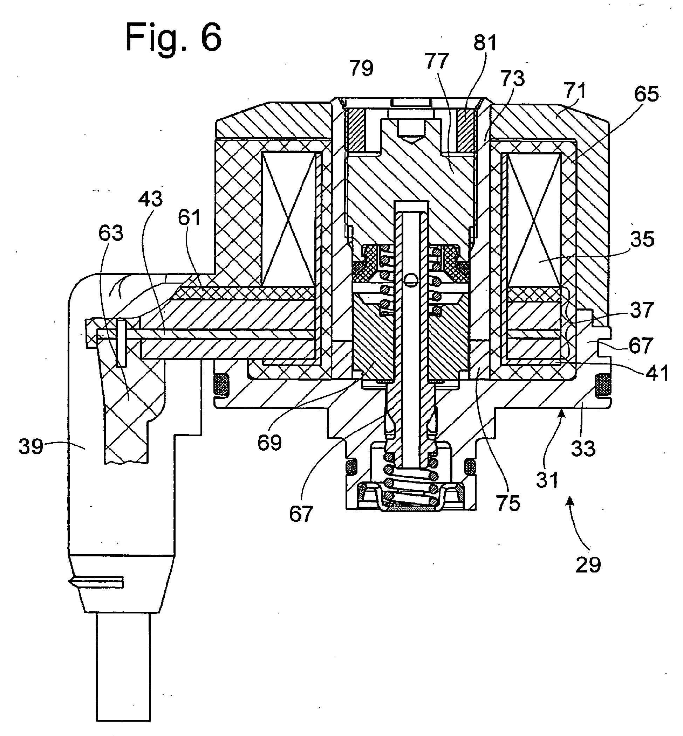

Mit der Fig. 6 soll dokumentiert werden, dass die Schaltungsanordnung 37 auch unterhalb des Spulenkörpers 35 angeordnet sein kann. Die Durchgangsöffnung 55 (Fig. 4) ist derart dimensioniert, dass der Rückschlosskörper 73 und der Isolator 75 aufgenommen werden können. Dadurch ist es möglich, dass das bewegliche Aktuatorbauteil, nämlich der Ringkörper 69, die Stellschraube 77 oder der verschiebbare Leitkörper 81 ebenfalls innerhalb der Schaltungsanordnung angeordnet sein kann, so dass insgesamt ein axial kürzeres Gehäuse 71 verwendbar ist.

## Patentansprüche

1. Verstellbares Ventil, insbesondere für einen Schwingungsdämpfer, in einem Ventilgehäuse, umfassend einen axial verstellbaren Aktuator mit einer Spule (35), die eine äußere Kunststoffummantelung (65) aufweist sowie ein verstellbares Ventilteil, wobei in dem Ventilgehäuse eine elektronische Schaltungsanordnung (37) angeordnet ist,
**dadurch gekennzeichnet, dass** und eine Leiterplatte (43) der Schaltungsanordnung (37) mit einer zur Kunststoffummantelung (65) der Spule (35) separaten Beschichtung (53) ausgeführt ist, wobei die Leiterplatte eine Durchgangsöffnung aufweist, durch die sich ein bewegliches Bauteil des Aktuators erstreckt und
**dass** die die Spule (35) einhüllende äußere Kunststoffummantelung (65) zusätzlich auch die Beschichtung (53) der Leiterplatte (43) umschließt,

2. Verstellbares Dämpfventil nach Anspruch 1,
**dadurch gekennzeichnet,**
**dass** die Leiterplatte einen kreisringförmigen (45) und einen sich daran radial anschließenden Bestückungsbereich (47) für elektronische Bauteile aufweist.

3. Verstellbares Dämpfventil nach Anspruch 2,
**dadurch gekennzeichnet,**
**dass** der kreisringförmige Bestückungsbereich (45) in seiner radialen Ausdehnung einer Spule (35) des Aktuators angepasst ist.

4. Verstellbares Dämpfventil nach Anspruch 1,
**dadurch gekennzeichnet,**
**dass** die Beschichtung (53) der Schaltungsanordnung (37) zur Positionierung eine Formschlussverbindung mit dem Aktuator eingeht.

## Claims

1. Adjustable valve, in particular for a vibration damper, in a valve housing, comprising an axially adjustable actuator having a coil (35) which has an outer plastics casing (65), and further comprising an adjustable valve part, wherein an electronic circuit arrangement (37) is disposed in the valve housing, **characterized in that** a printed circuit board (43) of the circuit arrangement (37) is realized with a coating (53) which is separate to the plastics casing (65) of the coil (35), the printed circuit board having a through-opening through which a movable structural part of the actuator extends, and **in that** the outer plastics casing (65) enveloping the coil (35) additionally also encloses the coating (53) of the printed circuit board (43).

2. Adjustable damping valve according to Claim 1, **characterized in that** the printed circuit board has an annular mounting region (45) and a radially adjoining mounting region (47) for electronic components.

3. Adjustable damping valve according to Claim 2, **characterized in that** the annular mounting region (45) is matched in its radial extent to a coil (35) of the actuator.

4. Adjustable damping valve according to Claim 1, **characterized in that** the coating (53) of the circuit arrangement (37), for positioning purposes, enters into a positive connection with the actuator.

## Revendications

1. Soupape réglable, en particulier pour un amortisseur de vibrations, dans un corps de soupape, comprenant un actionneur mobile axialement avec une bobine (35) qui présente une enveloppe extérieure de plastique (65), ainsi qu'une partie de soupape réglable, dans laquelle un ensemble de circuit électronique (37) est disposé dans le corps de soupape, **caractérisée en ce qu'**une plaquette de circuits imprimés (43) du circuit électronique (37) est réalisée avec un revêtement (53) séparé de l'enveloppe de plastique (65) de la bobine (35), la plaquette de circuits imprimés présentant une ouverture de passage à travers laquelle s'étend un composant mobile de l'actionneur, et **en ce que** l'enveloppe extérieure de plastique (65) entourant la bobine (35) entoure en plus aussi le revêtement (53) de la plaquette de circuits imprimés (43).

2. Soupape d'amortissement réglable selon la revendication 1, **caractérisée en ce que** la plaquette de circuits imprimés comprend une zone d'équipement annulaire ronde (45) et une zone d'équipement (47) se raccordant radialement à celle-ci pour des composants électroniques.

3. Soupape d'amortissement réglable selon la revendication 2, **caractérisée en ce que** la zone d'équipement annulaire ronde (45) est adaptée, dans son extension radiale, à une bobine (35) de l'actionneur.

4. Soupape d'amortissement réglable selon la revendication 1, **caractérisée en ce que** le revêtement (53) du circuit électronique (37) est engagé, pour son positionnement, dans un assemblage à complémentarité de forme avec l'actionneur.
